Europäisches Patentamt

European Patent Office

Office européen des brevets

(19)

(11) Veröffentlichungsnummer : **0 336 224 B1**

(12) **EUROPÄISCHE PATENTSCHRIFT**

(45) Veröffentlichungstag der Patentschrift :
**08.07.92 Patentblatt 92/28**

(21) Anmeldenummer : **89105184.9**

(22) Anmeldetag : **22.03.89**

(51) Int. Cl.⁵ : **G01H 1/00**

(54) **Aufnehmer und Verfahren zur Schallemissionsprüfung.**

(30) Priorität : **05.04.88 DE 3811381**

(43) Veröffentlichungstag der Anmeldung :
**11.10.89 Patentblatt 89/41**

(45) Bekanntmachung des Hinweises auf die
Patenterteilung :
**08.07.92 Patentblatt 92/28**

(84) Benannte Vertragsstaaten :
**CH DE FR GB IT LI**

(56) Entgegenhaltungen :
**DE-A- 2 000 641**
**DE-A- 2 614 376**
**DE-C- 2 414 936**
**DE-C- 2 646 389**
**DE-C- 3 303 412**
**DE-C- 3 315 649**
**GB-A- 2 189 320**

(56) Entgegenhaltungen :
**US-A- 3 968 055**
**PATENT ABSTRACTS OF JAPAN, Band 8, Nr.
219 (P-306)[1656], 5. Oktober 1984; & JP-A-59
102 126 (BABCOCK HITACHI K.K.)13-06-1984**
**VDI BERICHTE, Band 568, 1985, Seiten 1-18; V.
BAUERNFEIND et al.: "Schwingungs- und
Körperschallüberwachung anPrimäkreiskomponenten von Kernkraftwerken"**
**LE NOUVEL AUTOMATISME, Band 27, Nr. 33,
Oktober-November 1982, Seiten 41-48; D.
MANSION: "11- accélération, vibrations etchocs"**

(73) Patentinhaber : **SIEMENS
AKTIENGESELLSCHAFT
Wittelsbacherplatz 2
W-8000 München 2 (DE)**

(72) Erfinder : **Schulze, Günther, Dr.
Geissäckerstrasse 15
W-8510 Fürth (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

EP 0 336 224 B1

**Beschreibung**

Die Erfindung betrifft einen Aufnehmer mit einem Koppelmittel für die Schallemissionsprüfung eines Bauteiles, insbesondere eines Reaktordruckbehälters. Sie betrifft auch ein Verfahren zur Prüfung eines Bauteiles, wobei ein Aufnehmer für die Schallemissionsprüfung über ein Koppelmittel an das Bauteil angekoppelt wird.

Bei der Schallemissionsprüfung sind hochfrequente Schallsignale üblicherweise zwischen 0,1 MHz und 2 MHz, die sich im Bauteil ausbreiten, an der Bauteiloberfläche durch einen geeigneten Aufnehmer zu registrieren.

Im Stand der Technik unterscheidet man scharf Aufnehmer für Schallemission, für Ultraschall und für Körperschall. Während der Frequenzbereich der Schallemission von 0,1 MHz bis 2 MHz reicht, erstreckt sich das Frequenzband des Ultraschalls von 1 MHz bis ca. 20 MHz und der Bereich des Körperschalls erstreckt sich zwischen 1 kHz und ca. 10 kHz.

Der aus der US-C- 3 968 055 bekannte Aufnehmer ist ein Ultraschallaufnehmer, der gleichzeitig ein Ultraschallsender ist. Er wird daher Ultraschallwandler genannt.

Geeignete Aufnehmer für Körperschall sind Beschleunigungsaufnehmer, die beispielsweise aus "Mechanical Vibration and Shock Measurements; by Prof. Jens Trampe Broch, Okt. 1980" und aus "Piezoelektrische Meßtechnik; J. Tichy und G. Gautschi, 1980" bekannt sind. Ein solcher handelsüblicher Beschleunigungsaufnehmer enthält mindestens ein Piezoelement und eine seismische Masse. Er ist üblicherweise auf eine Resonanzfrequenz zwischen 1 kHz und 100 kHz abgestimmt, so daß eindringende Körperschallwellen die seismische Masse zum Schwingen anregen. Die Schwingungen werden durch ein oder mehrere Piezoelemente in elektrische Signale umgesetzt, die dann ausgewertet werden.

Ein derartiger Körperschallaufnehmer ist auch aus den VDI-Berichten, Band 568, 1985, Seiten 1 bis 18, Bauernfeind et al "Schwingungs- und Körperschallüberwachung an Primärkreiskomponenten von Kernkraftwerken" bekannt.

Eine Vorrichtung zum Anbringen eines Aufnehmers mit Bolzen an ein Bauteil ist aus Patent Abstracts of Japan, Band 8, Nr. 219 (JP-A- 59 102 126) bekannt.

Ein üblicher Schallemissionsaufnehmer besteht im wesentlichen aus einem Piezoelement, das an ein Bauteil über ein Koppelmittel anzukoppeln ist. Ein üblicher Schallemissionsaufnehmer weist eine seismische Masse nicht auf. Schallwellen geeigneter Frequenz werden direkt im Piezoelement in elektrische Signale umgewandelt. Damit Schallwellen vom Bauteil in einen üblichen Schallemissionsaufnehmer gelangen können, ist eine Ankopplung mit einem Koppelmittel, beispielsweise mit Fett, notwendig. Ein solcher Schallemissionsaufnehmer ist beispielsweise aus der GB-A- 2 189 320 bekannt.

Alle üblichen Koppelmittel sind für sehr hohe Temperaturen, die beispielsweise im Bereich von Primärkreiskomponenten eines Kernkraftwerkes herrschen, nicht geeignet. Daher sind bisher bekannte Schallemissionsaufnehmer nicht verwendbar für einen Dauerbetrieb an solchen Primärkreiskomponenten. Die bekannten Aufnehmer werden deshalb vor jeder Schallemissionsprüfung neu installiert und anschließend wieder demontiert. Dabei werden die Aufnehmer und Koppelmittel nur kurzzeitig, z.B. kürzer als 50 Stunden, einer Temperatur von ca. 110° C ausgesetzt.

Die notwendige Neuinstrumentierung und spätere Demontage der Aufnehmer verursacht erheblichen technischen Aufwand und hohe Kosten. Zur Installierung und Demontage der Aufnehmer an Primärkreiskomponenten eines Kernkraftwerkes, beispielsweise am Reaktordruckbehälter, sind wegen der Strahlenbelastung und der hohen Temperatur aufwendige und teuere Manipulatoren erforderlich. Selbst mit aufwendigen Manipulatoren ist aber die Ankopplung der Aufnehmer nicht so zuverlässig wie von Hand durchführbar. Es ist daher eine temperaturbeständige Ankopplung der Aufnehmer, die einen Betrieb über längere Zeit hinweg gestattet, anzustreben.

Fachleute gingen bisher davon aus, daß für hohe Frequenzen, d.h. für Frequenzen oberhalb von 0,1 MHz stets Schallemissionsaufnehmer einzusetzen sind, während für tiefe Frequenzen, d.h. für Frequenzen unterhalb von ca. 10 kHz, ausschließlich Beschleunigungsaufnehmer Verwendung finden sollten.

Der Erfindung liegt die Aufgabe zugrunde, eine Einrichtung zur Schallemissionsprüfung eines Bauteiles anzugeben, die ein Schallsignal im Frequenzbereich von 100 kHz bis 2 MHz abzugeben imstande ist und die selbst bei Umgebungstemperaturbedingungen, wie sie im Bereich des Primärkreislaufes beim Betrieb eines Kernkraftwerkes herrschen, also z.B. bei 320° C, im Dauerbetrieb einsetzbar ist. Eine aufwendige Installierung und Demontage von Aufnehmern für jede Meßreihe soll nicht mehr erforderlich sein. Weiterhin soll ein Verfahren zur Schallemissionsprüfung angegeben werden.

Die erstgenannte Aufgabe wird gemäß des unabhängigen Anspruches 1 dadurch gelöst, daß der Aufnehmer einen handelsüblichen Beschleunigungsaufnehmer umfaßt, der mindestens ein Piezoelement und eine seismische Masse enthält und der üblicherweise auf eine Resonanzfrequenz zwischen 1 kHz und 100 kHz abgestimmt ist, und daß das Koppelmittel zur Ankoppelung des Beschleunigungsaufnehmers an das Bauteil für

2

den Frequenzbereich von 0,1 MHz bis 2 MHz dient.

Vorteilhajte Ansgestaltungen entnimmt man den abhängigen Ansprüchen. Mit dem im Vergleich zu einem üblichen Schallemissionsaufnehmer prinzipiell unterschiedlich aufgebauten Beschleunigungsaufnehmer sind beim Einsatz des genannten geeigneten Koppelmittels überraschend auch Schallsignale zwischen 0,1 MHz und 2 MHz an einem Bauteil sehr gut zu registrieren. Dabei wird der Vorteil erzielt, daß der Aufnehmer, da ein Beschleunigungsaufnehmer widerstandsfähiger als ein üblicher Schallemissionsaufnehmer ist, selbst bei sehr hohen Temperaturen und bei Strahlenbelastung ständig am Bauteil verbleiben kann.

Mit dem Aufnehmer ist eine Schallemissionsprüfung am Primärkreislauf eines Kernkraftwerkes oder in einer anderen kerntechnischen Anlage jederzeit durchführbar. Eine aufwendige Neuinstallierung und Demontage von Aufnehmern am Primärkreislauf für jede durchzuführende Prüfung ist nicht länger erforderlich. Dadurch sind aufwendige und teuere Manipulatoren nicht mehr notwendig. Darüber hinaus ist eine verbesserte Aufnehmerankopplung gegeben, da eine einmalige Installierung vor der Inbetriebnahme der Anlage ausreicht, die von Hand durchführbar ist, da vor Inbetriebnahme der Bereich des Primärkreislaufs vom Personal bedienbar ist. Eine spätere Installierung durch einen Manipulator ist nicht notwendig.

Schließlich wird durch die ermöglichte Dauerinstrumentierung eine Überwachung oder Prüfung von mit dem Schallemissionsprüfungsverfahren bisher schwer prüfbaren Komponenten erst ermöglicht. Beispielsweise sind durch eine Dauerüberwachung Austenit-Ferrit-Mischnähte überwachbar.

Beschleunigungsaufnehmer werden seit langem erfolgreich für Körperschallüberwachungssysteme (KÜS) eingesetzt. Der untersuchte Frequenzbereich des Körperschalls liegt zwischen ca. 0,1 kHz und 20 kHz deutlich unterhalb der Resonanzfrequenz des Aufnehmers. Hierzu reicht eine einfache mechanisch feste Ankopplung des Beschleunigungsaufnehmers an das zu untersuchende Bauteil aus. Auch ein Luftspalt zwischen Bauteil und Beschleunigungsaufnehmer verhindert nicht gute Meßergebnisse.

Damit ein Beschleunigungsaufnehmer für die Schallemissionsprüfung einsetzbar ist, wobei hochfrequente Schallwellen zu registrieren sind, ist zur mechanischen und akustischen Ankopplung des Beschleunigungsaufnehmers an das Bauteil das geeignete Koppelmittel vorgesehen.

Das Koppelmittel ist beispielsweise ein weiches Blech, oder auch nur ein zentraler Stift oder eine zentrale Schraube. Bei Verwendung eines weichen Bleches ist der Beschleunigungsaufnehmer durch eine Schraubverbindung mit dem Bauteil das weiche Blech plastisch verformend an das Bauteil angepreßt. Das Material des Bleches wird in alle Unebenheiten der Oberfläche des Bauteiles und der Kontaktfläche des Beschleunigungsaufnehmers hineingepreßt. Durch das vollständige Ausfüllen aller Unebenheiten wird eine gute akustische Ankopplung zwischen Beschleunigungsaufnehmer und Bauteil im Frequenzbereich der Schallemission zwischen ca. 0,1 MHz und ca. 2 MHz erzielt. Diese Ankopplungsmethode ist für hohe Temperaturen und dauerhafte Ankopplung geeignet.

Das zwischen dem Bauteil und dem Beschleunigungsaufnehmer angeordnete weiche Blech besteht beispielsweise aus Gold, Silber, Nickel oder Aluminium. Diese Materialien sind gut verformbar.

Mit dem zur Schallemissionsprüfung eingesetzten Beschleunigungsaufnehmer ist ein im Frequenzbereich der Schallemission, z.B. zwischen 0,1 MHz und 2 MHz arbeitender Vorverstärker verbunden. Die üblicherweise mit Beschleunigungsaufnehmern verbundenen Verstärker sind für den Einsatz bei der Schallemissionsprüfung ungeeignet, da ihr Frequenzbereich nur bis ca. 200 kHz reicht. Sie werden aber üblicherweise nur bis ca. 20 kHz eingesetzt. Durch den Einsatz von bei höheren Frequenzen arbeitenden Vorverstärkern wird die Auswertung von Schallemissionssignalen ermöglicht. Der Ausgang des Vorverstärkers ist dazu mit einer Auswerteeinheit verbunden.

Zur Befestigung des Beschleunigungsaufnehmers am Bauteil ist eine Einrichtung vorgesehen, die das Koppelmittel derart an die Oberflächen des Bauteiles und des Beschleunigungsaufnehmers anpreßt, daß eine Ankopplung für den Frequenzbereich von 0,1 MHz bis 2 MHz gewährleistet ist. Eine solche Befestigungseinrichtung ist beispielsweise eine Schraubverbindung. Die Einrichtung kann auch ein entsprechend dimensionierter Magnet sein.

Falls die Umgebungstemperatur es zuläßt, ist als Koppelmittel statt einem weichen Blech auch ein gelartiges Medium, beispielsweise Fett, einsetzbar.

Der verwendete Beschleunigungsaufnehmer weist beispielsweise eine Anzahl von Piezoelementen auf, die auf einem Stift zwischen einer Grundplatte und der seismischen Masse angeordnet sind. Der Stift ist beispielsweise sowohl in der Grundplatte als auch in der seismischen Masse verschraubt. Beispielsweise bestehen die Grundplatte, der Stift und die seismische Masse jeweils aus einem Metall. Dieser Aufbau gewährleistet gute Meßergebnisse.

Beispielsweise ist ein Umschalter vorgesehen, mit dem der Ausgang des Beschleunigungsaufnehmers wahlweise auf eine Auswerteeinheit für Niederfrequenz oder auf eine andere Auswerteeinheit für Hochfrequenz umschaltbar ist. Nach einem anderen Beispiel ist der Ausgang des Beschleunigungsaufnehmers über einen Tiefpaß mit einer Auswerteeinheit für Niederfrequenz und über einen Hochpaß mit einer Auswerteeinheit für Hochfrequenz verbunden. Mit diesen beiden Schaltungen wird der Vorteil erzielt, daß der eingesetzte Beschleunigungsaufnehmer in gleicher Weise für die Schallemissionsprüfung und zusätzlich entsprechend seiner ursprünglichen Bestimmung für die Körperschallprüfung einsetzbar ist.

Die zweitgenannte Aufgabe, nämlich die Angabe eines Verfahrens zur Prüfung eines Bauteiles, wobei ein Aufnehmer für die Schallemissionsprüfung über ein Koppelmittel an das Bauteil angekoppelt wird, wird gemäß des unabhängigen Anspruches 14 dadurch gelöst, daß ein handelsüblicher Beschleunigungsaufnehmer, der mindestens ein Piezoelement und eine seismische Masse enthält und der üblicherweise auf eine Resonanzfrequenz zwischen 1 kHz und 100 kHz abgestimmt ist, über ein Koppelmittel für den Frequenzbereich von 0,1 MHz bis 2 MHz an das Bauteil angekoppelt und zur Prüfung verwendet wird.

Dadurch wird ermöglicht, daß im handelsüblichen Beschleunigungsaufnehmer Schallemissionswellen erkannt werden und daß ein entsprechendes Schallsignal abgegeben wird. Da ein handelsüblicher Beschleunigungsaufnehmer und das verwendete Koppelmittel temperaturbeständiger ist als ein üblicher Schallemissionsaufnehmer, ist mit einem ständig installierten Aufnehmer nach der Erfindung selbst in Bereichen hoher Umgebungstemperatur, beispielsweise am Primärkreislauf eines Kernkraftwerkes, eine Schallemissionsprüfung durchführbar.

Beispielsweise ist mit ein und demselben Beschleunigungsaufnehmer bei Verwendung von zwei Auswerteeinheiten nacheinander eine Schallemissionsprüfung und eine Dauerkörperschallüberwaschung durchführbar. Man kommt also mit nur einem Aufnehmer für Überprüfungen aus, die bisher zwei getrennte Aufnehmer, nämlich einen Schallemissionsaufnehmer und einen Körperschallaufnehmer, erforderten.

Insbesondere wird mit dem Aufnehmer gemäß der Erfindung der Vorteil erzielt, daß im Bereich hoher Temperaturen, beispielsweise im Bereich des Primärkreislaufes eines Kernkraftwerkes, jederzeit Schallemissionsprüfungen durchführbar sind, da entsprechende Aufnehmer wegen ihrer Temperaturbeständigkeit ständig installiert sein können. Sie müssen nicht nach jeder Prüfung entfernt und für eine erneute Prüfung wieder installiert werden, wofür wegen der Strahlenbelastung aufwendige Manipulatoren erforderlich wären.

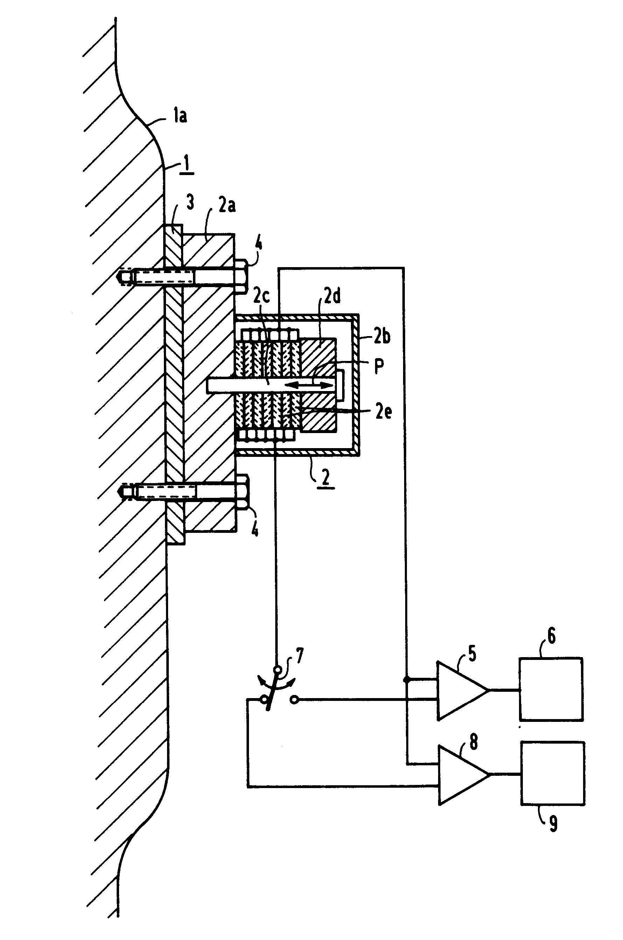

Ein Ausführungsbeispiel der Erfindung wird anhand der Zeichnung näher erläutert:

An einem Bauteil 1 im Bereich des Primärkreislaufes eines Kernkraftwerkes, beispielsweise am Reaktordruckbehälter, ist eine schon bei der Herstellung des Bauteiles 1 gefertigte Anformung 1a oder Verdickung vorhanden. An dieser Anformung 1a ist ein als solcher bekannter Beschleunigungsaufnehmer 2 angeordnet.

Der Beschleunigungsaufnehmer 2 umfaßt eine zylindrische Grundplatte 2a aus Metall, auf der zentral ein topfförmiges Gehäuse 2b angeordnet ist. Innerhalb des Gehäuses 2b befindet sich ein am einen Ende zentral in die Grundplatte 2a eingelassener und dort befestigter Stift 2c z.B. aus Metall, der am anderen Ende eine seismische Masse 2d trägt. Die seismische Masse 2d ist ein Körper, dessen Masse wesentlich großer ist als die Masse des Stiftes 2c. Die in der Zeichnung dargestellte seismische Masse 2d ist ein zylindrischer Körper aus Metall, dessen Durchmesser wesentlich größer ist als der Durchmesser des Stiftes 2c. Zwischen der schwingfähigen seismischen Masse 2d und der Grundplatte 2a sind den Abstand anfüllend nebeneinander mehrere Piezoelemente 2e auf dem Stift 2c angeordnet. Beim Einsatz als Beschleunigungsaufnehmer schwingt die seismische Masse 2d gegenüber dem Bauteil 1 in Richtung des Doppelpfeiles p. Die Piezoelemente 2e wandeln die Schwingungen der seismischen Masse 2d in elektrische Signale um.

Beim Einsatz des Beschleunigungsaufnehmers 2 als Schallemissionsaufnehmer befindet sich als Koppelmittel zwischen der Grundplatte 2a des Beschleunigungsaufnehmers 2 und der Oberfläche der Anformung 1a des Bauteiles 1 eine Folie oder ein weiches Blech 3 aus Metall, beispielsweise aus Gold. Es kann auch aus Silber oder Nickel oder Aluminium bestehen. Die Grundplatte 2a des Beschleunigungsaufnehmers 2 ist durch Schrauben 4 mit der Anformung 1a des Bauteiles 1 bei dazwischengelegtem Blech 3 verbunden. Das weiche Blech 3 ist unter dem Druck der Schraubverbindung plastisch verformt. Es füllt verbliebene Unebenheiten der bearbeiteten Oberfläche der Anformung 1a des Bauteiles 1 und der Oberfläche der Grundplatte 2a aus. Beim Einsatz des Beschleunigungsaufnehmers 2 als Schallemissionsaufnehmer bleibt die seismische Masse 2d in Ruhe. Die Schallemissionsschwingungen werden direkt in den Piezoelementen 2e empfangen. Zur Auswertung der empfangenen Signale stehen die Piezoelemente 2e über einem für Frequenzen über 0,1 MHz geeigneten Vorverstärker 5 mit einer Auswerteeinheit 6 in Verbindung.

Beim Betrieb des Aufnehmers gelangt Schall im Frequenzbereich zwischen 0,1 MHz und ca. 2 MHz vom Bauteil 1 an der Anformung 1a über das Blech 3 in den Beschleunigungsaufnehmer 2. Die Schallschwingungen werden durch die Piezoelemente 2e in elektrische Schwingungen umgewandelt, die über den Vorverstärker 5 durch die Auswerteeinheit 6 registriert werden.

Um den Körperschallaufnehmer 2 auch noch zum Registrieren von Körperschall verwenden zu können, sind die Piezoelemente 2e durch einen Schalter 7 wahlweise mit dem Vorverstärker 5 und der Auswerteeinheit 6 und mit einem Vorverstärker 8 und einer Auswerteeinheit 9 für Signale im Bereich zwischen 1 kHz und ca. 20 kHz zu verbinden. Es können auch die Auswerteeinheit 6 über einen Hochpaß und die Auswerteeinheit 9 über einen Tiefpaß mit den Piezoelementen 2e verbunden sein. Dann ist der Schalter 7 nicht erforderlich.

**Patentansprüche**

1. Aufnehmer mit einem Koppelmittel für die Schallemissionsprüfung eines Bauteiles (1), insbesondere eines Reaktordruckbehälters, **dadurch gekennzeichnet** , daß er einen handelsüblichen Beschleunigungsaufnehmer (2) umfaßt, der mindestens ein Piezoelement (2e) und eine seismische Masse (2d) enthält und der üblicherweise auf eine Resonanzfrequenz zwischen 1 kHz und 100 kHz abgestimmt ist, und daß das Koppelmittel zur Ankoppelung des Beschleunigungsaufnehmers (2) an das Bauteil (1) für den Frequenzbereich von 0,1 MHz bis 2 MHz dient.

2. Aufnehmer nach Anspruch 1, **dadurch gekennzeichnet,** daß das Koppelmittel ein weiches Metallblech (3) ist.

3. Aufnehmer nach Anspruch 2, **dadurch gekennzeichnet,** daß das weiche Blech (3) aus Gold, aus Silber, aus Nickel oder aus Aluminium besteht.

4. Aufnehmer nach einem der Ansprüche 1 bis 3, **dadurch gekennzeichnet,** daß mit dem Beschleunigungsaufnehmer (2) ein im Frequenzbereich der Schallemission arbeitender Vorverstärker (5) verbunden ist, der mit einer Auswerteeinheit (6) in Verbindung steht.

5. Aufnehmer nach einem der Ansprüche 1 bis 4, **dadurch gekennzeichnet,** daß ein Umschalter (7) vorgesehen ist, mit dem der Ausgang des Beschleunigungsaufnehmers (2) wahlweise auf eine Auswerteeinheit (6) für Hochfrequenz oder auf eine Auswerteeinheit (9) für Niederfrequenz umschaltbar ist.

6. Aufnehmer nach einem der Ansprüche 1 bis 4, **dadurch gekennzeichnet,** daß der Ausgang des Beschleunigungsaufnehmers (2) über einen Tiefpaß mit einer Auswerteein heit (9) für Niederfrequenz und über einen Hochpaß mit einer Auswerteeinheit (6) für Hochfrequenz verbunden ist.

7. Aufnehmer nach einem der Ansprüche 1 bis 6, **dadurch gekennzeichnet,** daß eine Einrichtung vorgesehen ist, über die der Beschleunigungsaufnehmer (2) am Bauteil (1) befestigbar ist.

8. Aufnehmer nach Anspruch 7, **dadurch gekennzeichnet,** daß die Einrichtung zur Befestigung eine Schraubverbindung ist, die Schrauben (4) aufweist.

9. Aufnehmer nach Anspruch 7, **dadurch gekennzeichnet,** daß die Einrichtung zur Befestigung einen Magneten umfaßt.

10. Aufnehmer nach einem der Ansprüche 1 bis 9, **dadurch gekennzeichnet,** daß das Koppelmittel ein gelartiges Medium wie Fett ist.

11. Aufnehmer nach einem der Ansprüche 1 bis 10, **dadurch gekennzeichnet,** daß der Beschleunigungsaufnehmer (2) eine Anzahl von Piezoelementen (2e) enthält, die auf einem Stift (2c) zwischen einer Grundplatte (2a) und einer seismischen Masse (2d) angeordnet sind.

12. Aufnehmer nach Anspruch 11, **dadurch gekennzeichnet,** daß der Stift (2c) sowohl in der Grundplatte (2a) als auch in der seismischen Masse (2d) verschraubt ist.

13. Aufnehmer nach einem der Ansprüche 11 und 12, **dadurch gekennzeichnet,** daß die Grundplatte (2a), der Stift (2c) und die seismische Masse (2d) jeweils aus einem Metall bestehen.

14. Verfahren zur Prüfung eines Bauteiles (1), wobei ein Aufnehmer für die Schallemissionsprüfung über ein Koppelmittel an das Bauteil (1) angekoppelt wird, **dadurch gekennzeichnet** , daß ein handelsüblicher Beschleunigungsaufnehmer (2), der mindestens ein Piezoelement (2e) und eine seismische Masse (2d) enthält und der üblicherweise auf eine Resonanzfrequenz zwischen 1 kHz und 100 kHz abgestimmt ist, über ein Koppelmittel für den Frequenzbereich von 0,1 MHz bis 2 MHz an das Bauteil (1) angekoppelt und zur Prüfung verwendet wird.

15. Verfahren nach Anspruch 14, **dadurch gekennzeichnet,** daß ein und derselbe Beschleunigungsaufnehmer (2) nacheinander zur Schallemissionsprüfung und zur Dauerkörperschallüberwachung verwendet wird.

**Claims**

1. Sensor having a coupling means for testing the acoustic emission of a component (1), in particular a reactor pressure vessel, **characterised in that** it comprises a commercially available accelerometer (2) which contains at least one piezo-electric element (2e) and a seismic mass (2d) and which is usually tuned to a resonant frequency of between 1 kHz and 100 kHz and in that the coupling means is used to couple the accelerometer (2) to the component (1) for the frequency range from 0.1 MHz to 2 MHz.

2. Sensor according to claim 1, **characterised in that** the coupling means is a soft metal sheet (3).

3. Sensor according to claim 2, **characterised in that** the soft metal sheet (3) consists of gold, of silver, of nickel or of aluminium.

4. Sensor according to one of the claims 1 to 3, **characterised in that** connected with the accelerometer (2) there is a pre-amplifier (5) which operates in the frequency range of the acoustic emission and which communicates with an evaluating device (6).

5. Sensor according to one of the claims 1 to 4, **characterised in that** a change-over switch (7) is provided, with which switch the output of the accelerometer (2) can be selectively switched over to an evaluating device (6) for high frequency or to an evaluating device (9) for low frequency.

6. Sensor according to one of the claims 1 to 4, **characterised in that** the output of the accelerometer (2) is connected with an evaluating device (9) for low frequency by way of a low-pass filter and with an evaluating device (6) for high frequency by way of a high-pass filter.

7. Sensor according to one of the claims 1 to 6, **characterised in that** a device is provided, by way of which device the accelerometer (2) can be secured to the component (1).

8. Sensor according to claim 7, **characterised in that** the device for securing purposes is a screw connection having screws (4).

9. Sensor according to claim 7, **characterised in that** the device for securing purposes comprises a magnet.

10. Sensor according to one of the claims 1 to 9, **characterised in that** the coupling means is a gel-like medium such as grease.

11. Sensor according to one of the claims 1 to 10, **characterised in that** the accelerometer (2) contains a number of piezo-electric elements (2e) which are arranged on a pin (2c) between a base plate (2a) and a seismic mass (2d).

12. Sensor according to claim 11, **characterised in that** the pin (2c) is screwed both in the base plate (2a) and in the seismic mass (2d).

13. Sensor according to one of the claims 11 and 12, **characterised in that** the base plate (2a), the pin (2c) and the seismic mass (2d) are each made of a metal.

14. Method for testing a component (1) in which a sensor for testing acoustic emission is coupled by way of a coupling means to the component (1), **characterised in that** a commercially available accelerometer (2), which contains at least one piezo-electric element (2e) and a seismic mass (2d) and which is usually tuned to a resonant frequency of between 1 kHz and 100 kHz, is coupled by way of a coupling means for the frequency range from 0.1 MHz to 2 MHz to the component (1) and is used for testing purposes.

15. Method according to claim 14, **characterised in that** one and the same accelerometer is used successively for testing acoustic emission and for continuous structure-borne noise-monitoring.


**Revendications**

1. Détecteur comportant un moyen de couplage pour le contrôle de l'émission acoustique d'un composant (1), notamment d'un caisson sous pression d'un réacteur, **caractérisé par le fait** qu'il comporte un capteur d'accélération (2) usuel dans le commerce, qui contient au moins un élément piézoélectrique (2e) et une masse sismique (2d) et est réglé habituellement sur une fréquence de résonance comprise entre 1 kHz et 100 kHz, et que le moyen de couplage sert à coupler le capteur d'accélération (2) au composant (1) pour la gamme des fréquences allant de 0,1 kHz à 2 kHz.

2. Détecteur suivant la revendication 1, **caractérisé par le fait** que le moyen de couplage est une tôle métallique tendre (3).

3. Détecteur suivant la revendication 2, **caractérisé par le fait** que la tôle tendre (3) est formée d'or, d'argent, de nickel ou d'aluminium.

4. Détecteur suivant l'une des revendications 1 à 3, que le capteur d'accélération (2) est raccordé à un préamplificateur (5), qui travaille dans la gamme des fréquences de l'émission acoustique et est raccordé à l'unité d'évaluation (6).

5. Détecteur suivant l'une des revendications 1 à 4, **caractérisé par le fait** qu'il est prévu un commutateur (7), à l'aide duquel la sortie du capteur d'accélération (2) peut être commutée au choix sur une unité d'évaluation (6) pour la haute fréquence ou sur une unité d'évaluation (9) pour la basse fréquence.

6. Détecteur suivant l'une des revendications 1 à 4, **caractérisé par le fait** que la sortie du capteur d'accélération (2) est raccordée par l'intermédiaire d'un filtre passe-bas à une unité d'évaluation (9) pour la basse fréquence et par l'intermédiaire d'un filtre passe-haut à une unité d'évaluation (6) pour la haute fréquence.

7. Détecteur suivant l'une des revendications 1 à 6, **caractérisé par le fait** qu'il est prévu un dispositif au moyen duquel le capteur d'accélération (2) peut être fixé sur le composant (1).

8. Détecteur suivant la revendication 7, **caractérisé par le fait** que le dispositif de fixation est une liaison à vis qui comporte des vis (4).

9. Détecteur suivant la revendication 7, **caractérisé par le fait** que le dispositif de fixation comporte un aimant.

10. Détecteur suivant l'une des revendications 1 à 9, **caractérisé par le fait** que le moyen de couplage est un milieu en forme de gel, tel que de la graisse.

11. Détecteur suivant l'une des revendications 1 à 10, **caractérisé par le fait** que le capteur d'accélération (2) contient un certain nombre d'éléments piézoélectriques (2e), qui sont disposés sur une tige (2c) entre une plaque de base (2a) et une masse sismique (2d).

12. Capteur suivant la revendication 11, **caractérisé par le fait** que la tige (2c) est vissée aussi bien dans la plaque de base (2a) que dans la masse sismique ( 2d ).

13. Capteur suivant l'une des revendications 11 et 12, **caractérisé par le fait** que la plaque de base ( 2a ), la tige (2c) et la masse sismique (2d) sont réalisées respectivement en un métal.

14. Procédé pour contrôler un composant (1), selon lequel un détecteur pour le contrôle de l'émission acoustique est accouplé par l'intermédiaire d'un moyen de couplage au composant (1), **caractérisé par le fait** qu'un capteur d'accélération (2) usuel dans le commerce, qui contient au moins un élément piézoélectrique (2e) et une masse sismique (2d) et est réglé habituellement sur une fréquence de résonance comprise entre 1 kHz et 100 kHz, est accouplé au composant (1) par l'intermédiaire d'un moyen de couplage, pour la gamme des fréquences allant de 0,1 MHz à 2 MHz, et est utilisé pour le contrôle.

15. Procédé suivant la revendication 14, **caractérisé par le fait** qu'on utilise un même capteur d'accélération (2) successivement pour contrôler l'émission acoustique et pour contrôler le son permanent transmis par la structure.